# FASCICULE DE BREVET EUROPEEN

(11) **EP 2 365 369 B1**
(45) Date de publication et mention de la délivrance du brevet: **17.10.2012**
(21) Numéro de dépôt: 11153660.3
(22) Date de dépôt: 08.02.2011
(51) Int. Cl.: G02B 7/18, G02B 26/06, F16F 15/28

(54) **Système d'actionnement pour éléments mobiles à mouvements relatifs compensés dynamiquement et opposés**
Betätigungssystem für bewegliche Elemente mit relativen, dynamisch kompensierten Bewegungen und Gegenbewegungen
System for actuating movable elements with dynamically compensated and opposed relative movements

(30) Priorité: 12.02.2010 FR 1000585
(43) Date de publication de la demande: 14.09.2011
(73) Titulaire: Thales, 92200 Neuilly Sur Seine (FR); Centre National d'Etudes Spatiales, 75039 Paris Cedex 01 (FR)
(72) Inventeur: Baudasse, Yannick, 06130 GRASSE (FR)
(74) Mandataire: Esselin, Sophie

(56) Documents cités:
- FR-A- 1 059 124
- FR-A- 1 374 397
- FR-A1- 2 622 980
- FR-A1- 2 773 890
- US-A- 4 355 870

## Description

La présente invention se rapporte à un système d'actionnement pour au moins deux éléments mobiles à mouvements relatifs compensés dynamiquement et opposés, sans perturbation de l'environnement et résistant aux sollicitations extérieures.

Une des applications principales des systèmes d'actionnement auxquels se rapporte la présente invention concerne les mécanismes de type « Modulation de Phase » pour instruments d'optique spatiaux, destinés à effectuer des cycles de rotation ou de translation d'une « lame modulatrice » avec des incréments de position (Modulation à quatre phases).

Dans un instrument d'optique, de type interféromètre, ce mécanisme est situé entre la lame séparatrice et un des deux miroirs à échelettes. L'angle de « tilt » (cas de la rotation) ou le déplacement linéaire (cas de la translation) de la (ou des) « lame(s) modulatrice(s) » permet de modifier la longueur d'un trajet optique.

Dans ce type de mécanisme, le problème technique réside principalement en plusieurs points :
- Les charges et moments doivent êtres équilibrés et doivent rester internes au mécanisme, afin de ne pas perturber le reste de l'instrument.
- Dans le cas de plusieurs « lames modulatrices», leurs mouvements respectifs doivent être parfaitement synchronisés, tout en imitant en nombre les actionneurs (dans le cas d'une seule lame optique on utilise un élément « contrepoids »).
- L'ensemble, lorsqu'il est à bord d'un engin spatial, pendant la phase de lancement, doit être « intègre ». Ceci veut dire que, malgré l'absence de système de gerbage spécifique, il ne doit pas se dégrader sous l'effet des accélérations générées par le lanceur.

Le brevet FR 1 374 397 divulgue un mécanisme d'articulation en losange pour miroir (voir Fig. 7). Le document D2 divulgue un dispositif interférentiel comprenant deux lames prismatiques mobiles l'une par rapport à l'autre.

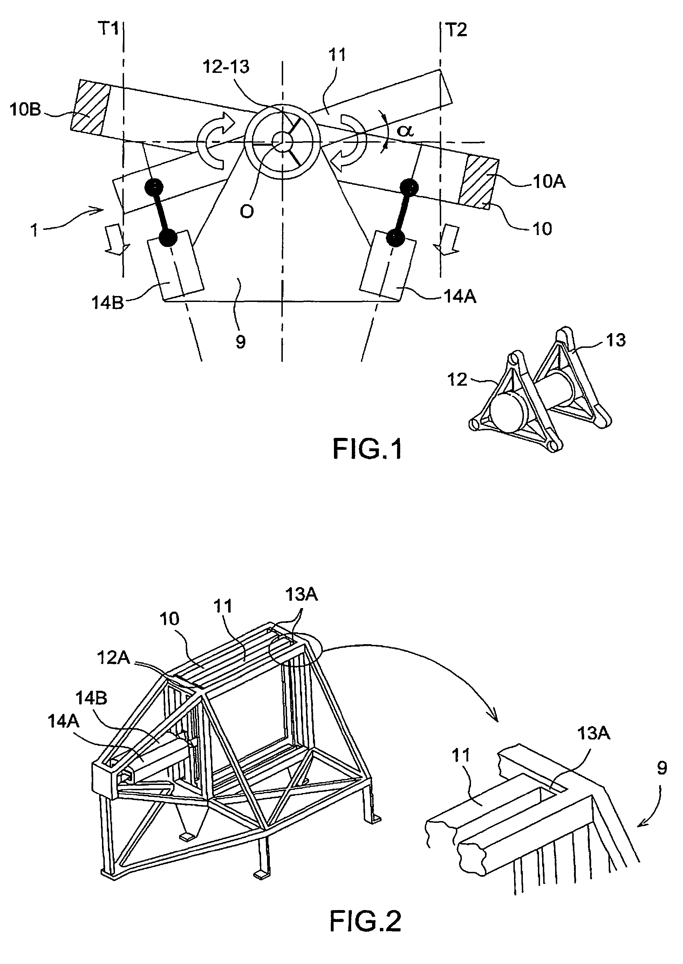

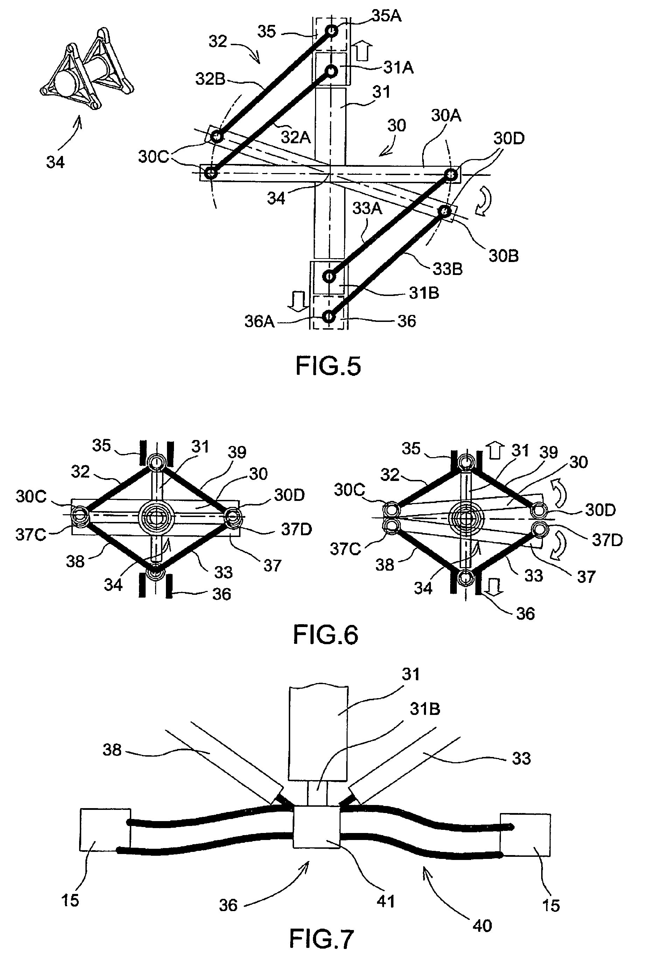

On a schématisé en figure 1 un système 1 d'actionnement autonome et non perturbateur de commande de mouvements de rotation opposés et synchronisés de deux éléments, une lame optique 11, et un cadre contrepoids 10 supportés en rotation autour d'un axe commun « O » à l'aide d'un palier comportant les éléments flexibles 12, 13 et similaire au palier 34 représenté en figure 5, l'ensemble faisant partie d'un instrument d'optique spatial. Ce système comporte essentiellement : un cadre support 9, deux actionneurs 14a, 14b disposés de façon à exercer un couple entre les éléments 10 et 11, afin de les orienter l'un par rapport d'un angle α. Les actionneurs sont de type piézo-électrique. L'élément 10 comporte à ses extrémités des pièces d'inertie 10a, 10b destinés à limiter la masse de l'ensemble. On a délimité par deux traits interrompus T1, T2, les limites du trajet du faisceau optique reçu par le dispositif 1.

Le système représenté en figure 2, du type à mouvements linéaires, comporte : une structure rigide porteuse 9 supportant deux lames optiques prismatiques compensatrices 10 et 11 par l'intermédiaire de lamelles métalliques flexibles de guidage identiques 12a, 13a , ces deux lames optiques prismatiques compensatrices 10 et 11 étant mues par deux actionneurs spécifiques14a et 14 b. Une lame 13a est représentée sur la vue de détail agrandie dans la partie de droite de la figure 2.

Lors du fonctionnement d'un mécanisme linéaire de ce type, afin de limiter les efforts perturbateurs vers l'instrument, chaque mise en mouvement d'un élément doit être compensée par une charge équivalente en sens opposé et sur un axe passant par les centres de gravité des éléments en mouvement. Il en est de même pour les mécanismes rotatifs où les centres de gravités des éléments en mouvement doivent préférentiellement se situer sur un unique axe de rotation.

Le système présenté en figure 1 propose un actuateur spécifique pour motoriser chaque élément, ce qui multiplie le nombre de composants. La synchronisation des mouvements est obtenue par des circuits électroniques complexes. La non-convergence des vecteurs de poussée des actuateurs et la désynchronisation des mouvements sont génératrices de dispersions vers l'instrument.

Le système linéaire présenté en figure 2 propose également un actuateur spécifique pour motoriser chacun des deux éléments. La non-convergence des deux vecteurs de poussée des actuateurs et la synchronisation électronique des mouvements sont génératrices de dispersions vers l'instrument.

La présente invention a pour objet un système d'actionnement pour au moins deux éléments mobiles à mouvements relatifs compensés dynamiquement et opposés, sans perturbation des éléments fixés dans la même structure rigide que lui, et résistant aux sollicitations extérieures. Un tel système doit être compact et sans jeu, il doit assurer une synchronisation « automatique » du mouvement de ces éléments mobiles (sans nécessiter de mécanisme supplémentaire de synchronisation) en étant auto-gerbé (sans nécessiter de mécanisme spécifique de gerbage), et très précis (précision telle que requise pour des instruments d'optique) et ayant une grande durée de vie (par exemple plus de 15 ans).

Le premier mode de réalisation du système d'actionnement conforme à l'invention est un système d'actionnement pour au moins deux éléments mobiles à mouvements relatifs de translation, et il est caractérisé en ce qu'il comporte les caractéristiques récitées dans la revendication 1.

Lorsqu'il y a 2n éléments mobiles (n>1), ceux-ci sont considérés deux à deux.

Le second mode de réalisation du système d'actionnement conforme à l'invention est un système d'actionnement pour au moins deux éléments mobiles à mouvements relatifs de rotation compensés dynamiquement et opposés, et il est caractérisé en ce qu'il comporte les caractéristiques récitées dans la revendication 5.

Lorsqu'il y a 2n éléments mobiles (n>1), ceux-ci sont considérés deux à deux.

Ainsi, le système de l'invention utilise une combinaison de leviers articulés permettant d'obtenir, à partir d'un mouvement d'entrée linéaire, deux mouvements alternatifs de sens opposés (en rotation ou en translation) parfaitement synchronisés. L'aménagement de ces leviers est tel qu'il permet de supprimer les efforts ou couples exportés du mécanisme vers les éléments fixés dans la même structure rigide que lui (éléments que comporte un banc optique, lorsque l'application de ce système concerne des instruments d'optique). La triangulation de ces leviers est telle qu'elle permet également d'amener les charges vibratoires du lancement vers les actionneurs initiateurs du mouvement et ainsi d'éviter l'emploi d'un mécanisme de gerbage spécifique.

La présente invention sera mieux comprise à la lecture de la description détaillée d'un mode de réalisation, pris à titre d'exemple non limitatif et illustré par le dessin annexé, sur lequel :
- les figures 1 et 2, déjà décrites ci-dessus, sont des schémas simplifiés de dispositifs d'actionnement de l'art antérieur, et
- les figures 3 à 7 sont des schémas simplifiés, des schémas fonctionnels équivalents, en vue de dessus, et des vues de détail de dispositifs d'actionnement conformes à l'invention.

La présente invention est décrite ci-dessous en référence à des instruments optiques pour engins spatiaux, mais il est bien entendu qu'elle n'est pas limitée à cette seule application, et qu'elle peut être mise en oeuvre dans diverses applications, embarquées ou non, dans lesquelles il faut imprimer des mouvements précis de translation ou de rotation, oscillatoires ou non (ces mouvements étant synchronisés, c'est-à-dire symétriques par rapport à une position nominale ou de repos de relativement faible amplitude, par exemple de quelques dixièmes de millimètre ou de degré). à des éléments mobiles sans perturber leurs dispositifs de support, ces éléments étant, le cas échéant, protégés des accélérations brusques que pourraient subir leurs supports.

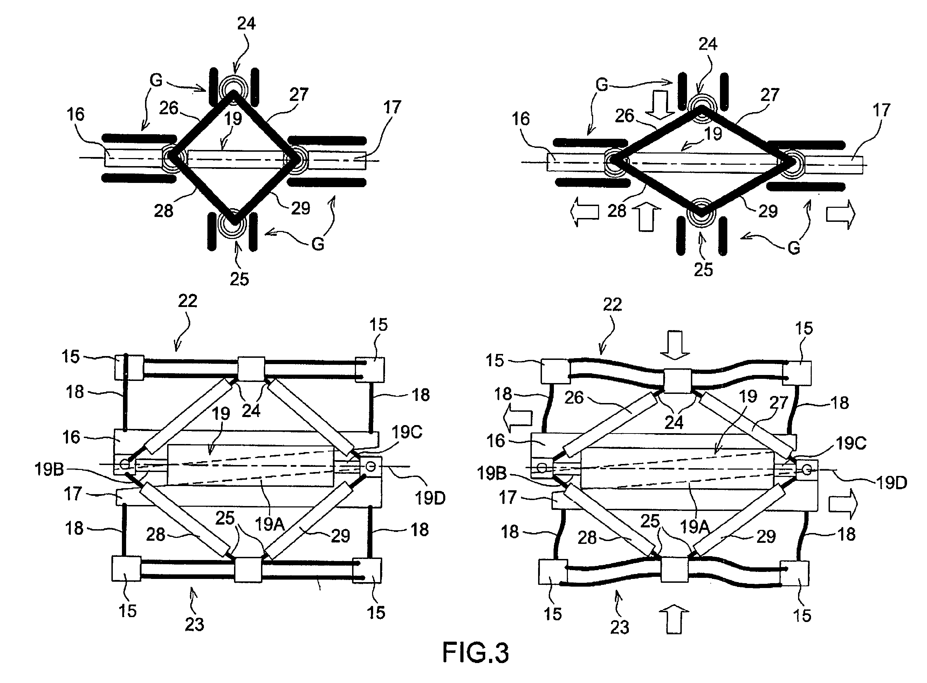

On a schématisé en figure 3 un exemple de réalisation du dispositif de l'invention pour deux états différents : sur la partie gauche de la figure, ce dispositif est représenté à l'état « de repos », et sur la partie droite de la figure, il est à l'état activé de l'actionneur. Dans chacune de ces deux parties gauche et droite de la figure 3, on a représenté en bas un exemple de réalisation dispositif et en haut son schéma fonctionnel équivalent.

Le dispositif de l'invention est supporté par une structure rigide, qui est ici un bâti similaire à celui représenté en figure 2. De ce bâti, on n'a schématisé que les montants 15 encadrant verticalement (perpendiculairement au plan du dessin) les lames optiques 16, 17. Les montants 15 du bâti supportent les deux lames optiques 16, 17, sensiblement parallèles entre elles, par l'intermédiaire de lamelles métalliques flexibles 18 permettant aux lames optiques des mouvements de translation parallèlement à leur propre plan. On notera que du fait que ces lamelles 18 se déforment en tournant légèrement, la distance entre leurs extrémités diminue légèrement, donc la distance entre les lames 16, 17 et l'axe 19D varie légèrement aussi. Cependant, cette variation n'a pas d'effet néfaste du fait que l'on cherche à faire varier le trajet du faisceau optique en lui faisant traverser une épaisseur de lame différente en fait, la somme des épaisseurs des deux lames optiques. Toutefois, si cela posait problème, on utiliserait des lames mécaniques en vis-à-vis (comme c'est le cas pour le guidage transverse avec les deux lames flexibles 22 et 24), ou bien des lames de guidage compensées de type connu.

Les mouvements des lames optiques sont commandés par un actionneur linéaire 19, par exemple du type piézo-électrique à corps cylindrique. De chaque extrémité du corps 19A de cet actionneur fait saillie un bras d'actionnement, 19B, 19C respectivement, ces bras étant coaxiaux à l'axe 19D du corps cylindrique. Les lamelles 18 sont, à l'état de repos, perpendiculaires à l'axe 19D du corps de l'actionneur 19. Les extrémités des bras 19B, 19C de l'actionneur 19 sont reliées chacune, de façon fixe ou articulée (pivots 20, 21), respectivement à chaque lame optique 16, 17: l'extrémité du bras 19B est reliée à la lame 16, tandis que l'extrémité du bras 19C est reliée à la lame 17. Ainsi, cet actionneur est monté flottant entre les deux lames optiques mobiles.

On fixe, parallèlement à l'axe 19D, entre les montants 15 du bâti pris deux à deux de part et d'autre de l'axe 19D, des liens 22, 23 présentant une « souplesse transverse ». Cette souplesse transverse signifie ici que le milieu de chacun de ces liens présente un seul degré de liberté en translation dans une direction perpendiculaire à l'axe 19D. Selon le mode de réalisation représenté, chacun de ces liens est parallèle, à l'état de repos, à l'axe 19D et est constitué par exemple de deux lamelles métalliques souples parallèles entre elles et disposées à faible distance l'une de l'autre (quelques millimètres, par exemple, cependant, plus la distance est importante, meilleur sera le guidage). Toutefois, il est bien entendu que ces liens peuvent être réalisés différemment, à condition de respecter ladite « souplesse transverse ».

Au milieu de la longueur de chacun des liens 22, 23, on fixe un pivot 24, 25 respectivement. Des tiges rigides identiques 26, 27, 28 et 29 relient respectivement les couples de pivots 20-24, 24-21, 21-25 et 25-20, et forment ainsi les côtés d'un losange régulier. Etant donné que, comme précisé ci-dessus, les lamelles 18 sont réalisées de façon à ne permettre aux lames qu'elles supportent que des mouvements de translation parallèles à l'axe 19D, les pivots 20 et 21 ne peuvent que se déplacer le long de l'axe 19D.

Les vues de la figure 3 étant des vues de dessus, il est bien entendu que l'on n'a représenté que les éléments 18 et 20 à 29 fixés à la partie supérieure des lames 16 et 17, et que l'on dispose avantageusement des éléments identiques aux éléments 18 et 20 à 29 à la partie inférieure des lames 16 et 17.

En variante, le dispositif décrit ci-dessus peut être composé d'un seul système de synchronisation spécifique si la masse à mettre en mouvement peut être symétrisée autour de l'actuateur.

Les mouvements permis aux pivots 20, 24, 21 et 25 sont des mouvements de translation à un seul degré de liberté (si on néglige la légère variation de distance entre les lames optiques et l'axe 19D, comme noté ci-dessus), ce qui est symbolisé dans la partie haute de la figure 3 par des « glissières » G dans lesquelles se déplacent les pivots correspondants. Ainsi, lorsque l'actionneur 19 est commandé de façon à faire sortir ses bras 19B, 19C du corps 19A, les centres des pivots 20 et 21 s'éloignent l'un de l'autre en suivant sensiblement l'axe 19D en entraînant les lames 16 et 17 dans des directions opposées et de façon synchrone (bien entendu, on suppose ici que les mouvements opposés des bras de l'actionneur sont synchrones entre eux). Le losange formé par les tiges 26 à 29 s'aplatit (partie de droite de la figure 3), c'est-à-dire que les pivots 24 et 25 se rapprochent l'un de l'autre, et leurs centres se déplacent sur la médiatrice du segment de droite délimité par les centres des pivots 20 et 21. Il en résulte que les lamelles des liens 22 et 23 s'incurvent en direction de l'axe 19D et que les pivots 24 et 25 se déplacent le long d'une droite perpendiculaire à l'axe 19D, et ont donc un mouvement de translation à un seul degré de liberté.

Du fait que les mouvements des lames 16 et 17 sont « contrôlés » par les déformations du losange formé par les tiges rigides 26 à 29, toute accélération subie par l'ensemble du système de l'invention ne modifie pas les positions relatives de ces deux lames (si, bien entendu, les bras de l'actionneur 19 sont bloqués dans leur position). Inversement, les mouvements des deux lames optiques ne sont pas transmis au bâti, et donc aux autres instruments solidaires de ce bâti du fait que ces mouvements s'équilibrent mutuellement grâce au même losange.

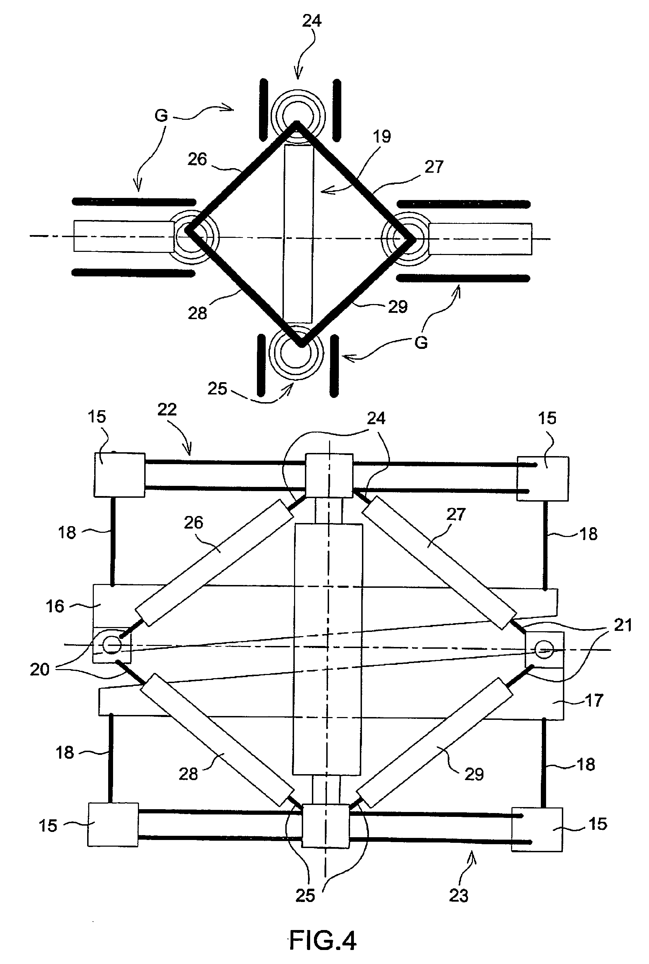

On a schématisé en figure 4 une variante du système de la figure 3. Sur cette figure 4, les éléments similaires à ceux de la figure 3 sont affectés des mêmes références numériques. La différence essentielle entre ces deux systèmes est que l'actionneur 19 est monté entre les pivots 24 et 25 (ces pivots 24 et 25, ainsi que les pivots 20 et 21 sont modifiés en conséquence, si nécessaire). Du fait que dans ce mode de réalisation de la figure 4 on garde les mêmes fixations par lamelles 18 des lames optiques 16, 17 et le même losange formé par les tiges rigides 26 à 29, on garde les avantages cités ci-dessus du système de la figure 3.

Sur les figures 5 et 6, on a représenté le système de l'invention dans le cas où l'on doit imprimer un mouvement de rotation à des lames optiques. Ce système est supporté par une structure (non représentée) qui est avantageusement similaire à celle schématisée en figures 3 et 4.

La figure 5 illustre le principe du mouvement de rotation par un schéma simplifié montrant une seule lame en deux positions différentes, ainsi qu'une vue de détail en perspective d'un palier de guidage pouvant être utilisé dans le système de l'invention, tandis que la figure 6 représente les schémas fonctionnels équivalents du système de l'invention à deux lames optiques en deux positions différentes, et une vue schématique partielle d'un détail de ce système.

Pour simplifier le dessin, on n'a représenté en figure 5 qu'une seule lame optique 30, en deux positions différentes : la position 30A est la position « de repos » (actionneur non activé), et la position 30B est la position de cette même lame après une rotation de quelques degrés dans le sens horaire imprimée par l'actionneur 31. L'actionneur 31, qui peut être le même que l'actionneur 19, comme illustré par le dessin, est représenté uniquement dans la position de repos, pour laquelle ses deux bras 31A, 31B sont rétractés au maximum. Les extrémités des bras 31A, 31B comportent chacune un pivot (35A, 36A respectivement) relié par une tige rigide 32, 33 respectivement, à un pivot (30C, 30D, respectivement) fixé sur une extrémité correspondante du montant « horizontal » du cadre de la lame optique 30. Ces tiges sont également représentées pour les deux positions de la lame 30 : positions 32A, 33A pour la position de repos et positions 32B, 33B après ladite rotation. Le palier 34 supportant la rotation des lames du système de l'invention peut être avantageusement tel que celui représenté sur la vue de détail de la figure 5. Ce palier a été décrit dans la demande de brevet français N° 07 53521 déposée le 27.02.2007, et ne sera donc pas décrit ici. Les extrémités des bras 31A, 31B sont guidées de façon à n'avoir qu'un seul degré de liberté en translation (selon une droite confondue avec l'axe longitudinal de l'actionneur31), ce qui est symbolisé en figures 5 et 6 par des « glissières 35 et 36.

Le système complet à deux lames optiques rotatives ou une lame et un élément contrepoids a été schématisé en figure 6, la vue de gauche correspondant à la position « de repos » des deux éléments mobiles (éléments sensiblement parallèles entre eux), et la vue de droite correspondant à une position après une faible rotation des deux lames dans des sens contraires. Ce système comporte, outre la lame optique 30, une deuxième lame optique 37, ces deux lames étant articulées chacune sur un palier tel que le palier 34. Chaque lame optique est actionnée par l'actionneur 31 par l'intermédiaire de tiges rigides 38, 39 de la même façon qu'est actionnée la lame 30. Les tiges 32, 33, 38 et 39 sont disposées de façon à former les côtés d'un losange régulier. Les éléments remplissant la fonction des glissières 35 et 36 sont des éléments similaires aux liens 22 et 23 des figures 3 et 4.

Sur la vue de détail partielle de la figure 7, on a représenté les détails du dispositif assurant la fonction de la glissière 36. Ce dispositif comporte un lien flexible 40 constitué, comme le lien 23, de deux lamelles métalliques flexibles au milieu de la longueur desquelles on a fixé un pivot 41 qui est reliée à l'extrémité du bras 31B de l'actionneur. Une des extrémités de chacune des tiges 33 et 38 est articulée sur un pivot 41. Les lamelles du lien 40 sont, par exemple, comme représenté sur la figure 7, incurvées en direction des lames optiques lorsque les bras de l'actionneur 31 sont rétractés, et rectilignes (ou incurvées dans le sens contraire) lorsque ces bras sont sortis au maximum du corps de l'actionneur. Les autres éléments de ce système des figures 5 et 6 (bâti, pivots, « glissières » relatives aux bras de l'actionneur) peuvent être les mêmes que ceux du système de la figure 3.

## Revendications

1. Système d'actionnement d'au moins deux éléments optiques mobiles à mouvements relatifs de translation compensés dynamiquement et opposés **caractérisé en ce qu'**il comporte, dans une structure rigide (9), au moins deux éléments optiques mobiles, au moins un actionneur linéaire (19) relié à un dispositif de transmission de mouvement à quatre bras rigides (26 à 29), articulés à leurs extrémités et formant un losange dont chacun des deux premiers sommets opposés est relié (20, 21) à un élément mobile correspondant (16, 17) et dont les deux autres sommets opposés ont un seul degré de liberté en translation (24, 25) et sont reliés à l'actionneur, chacun des deux éléments mobiles étant uniquement relié à un desdits premiers sommets (20, 21).

2. Système selon la revendication 1, **caractérisé en ce que** les éléments optiques mobiles sont montés sur la structure rigide par l'intermédiaire de lames flexibles (18).

3. Système selon l'une des revendications précédentes, **caractérisé en ce que** l'actionneur est un actionneur piézo-électrique.

4. Système selon l'une des revendications précédentes, **caractérisé en ce que** les éléments optiques mobiles sont des lames optiques et qu'il est monté à bord d'un engin spatial.

5. Système d'actionnement d'au moins deux éléments optiques mobiles (30, 37) à mouvements relatifs de rotation compensés dynamiquement et opposés , **caractérisé en ce qu'**il comporte, dans une structure rigide (9), au moins deux éléments optiques mobiles, au moins un actionneur linéaire (31) relié à un dispositif de transmission de mouvement à quatre bras rigides (32, 33 ; 38, 39), articulés à leurs extrémités et formant un losange, deux sommets opposés du losange étant reliés aux éléments mobiles et deux autres sommets opposés du losange étant reliés à l'actionneur (31), chaque bras de chaque paire de bras opposés (32, 33 et 38, 39) étant relié respectivement d'un côté à un même élément mobile que l'autre bras opposé de la paire et de l'autre côté à l'actionneur (31), chaque paire de bras opposés mettant en mouvement un élément mobile différent, des glissières (35 ; 36) n'ayant qu'un seul degré de liberté en translation selon un axe longitudinal de l'actionneur (31), lesdites glissières reliant les deux autres sommets opposés du losange à l'actionneur (31), et **caractérisé en ce que** les éléments mobiles sont articulés chacun sur au moins un palier (34).

6. Système selon la revendication 5, **caractérisé en ce que** l'actionneur est un actionneur piézo-électrique.

7. Système selon l'une des revendications 5 ou 6, **caractérisé en ce que** les éléments optiques mobiles sont des lames optiques et qu'il est monté à bord d'un engin spatial.

## Claims

1. A system for actuating at least two movable optical elements with dynamically compensated and opposed relative translation movements, **characterised in that** it comprises, in a rigid structure (9), at least two movable optical elements, at least one linear actuator (19) connected to a motion transmission device with four rigid arms (26 to 29) that are articulated at their ends and forming a lozenge, each of the first two opposing vertices of which is connected (20, 21) to a corresponding movable element (16, 17) and the other two opposing vertices of which have a single degree of freedom by translation (24, 25) and are connected to the actuator, each of the two movable elements being solely connected to one of said first vertices (20, 21).

2. The system according to claim 1, **characterised in that** the movable optical elements are mounted on the rigid structure by means of flexible plates (18).

3. The system according to any one of the preceding claims, **characterised in that** the actuator is a piezo-electric actuator.

4. The system according to any one of the preceding claims, **characterised in that** the movable optical elements are optical plates and that it is mounted on board a spacecraft.

5. A system for actuating at least two movable optical elements (30, 37) with dynamically compensated and opposed relative translation movements, **characterised in that** it comprises, in a rigid structure (9), at least two movable optical elements, at least one linear actuator (31) connected to a motion transmission device with four rigid arms (32, 33; 38, 39) that are articulated at their ends and forming a lozenge, two opposing vertices of the lozenge being connected to the movable elements and two other opposing vertices of said lozenge being connected to the actuator (31), each arm of each pair of opposing arms (32, 33 and 38, 39) being respectively connected on one side to the same movable element as the other opposing arm of the pair and on the other side to the actuator (31), each pair of opposing arms moving a different movable element, slides (35; 36) only having a single degree of freedom by translation along a longitudinal axis of the actuator (31), said slides connecting the other two opposing vertices of the lozenge to the actuator (31), and **characterised in that** the movable elements are each articulated on at least one bearing (34).

6. The system according to claim 5, **characterised in that** the actuator is a piezo-electric actuator.

7. The system according to any one of claims 5 to 6, **characterised in that** the movable optical elements are optical plates and that it is mounted on board a spacecraft.

## Patentansprüche

1. System zum Betätigen von wenigstens zwei beweglichen optischen Elementen mit dynamisch kompensierten und entgegengesetzten relativen Translationsbewegungen, **dadurch gekennzeichnet, dass** es in einer starren Konstruktion (9) wenigstens zwei bewegliche optische Elemente, wenigstens einen linearen Aktuator (19) umfasst, der mit einer Bewegungsübertragungsvorrichtung mit vier starren Armen (26 bis 29) verbunden ist, die an ihren Enden angelenkt sind und eine Raute bilden, deren zwei erste gegenüberliegende Scheitelpunkte jeweils mit einem entsprechenden beweglichen Element (16, 17) verbunden (20, 21) sind und deren zwei andere gegenüberliegende Scheitelpunkte einen einzigen Translationsfreiheitsgrad (24, 25) haben und mit dem Aktuator verbunden sind, wobei jedes der zwei beweglichen Elemente nur mit einem der ersten Scheitelpunkte (20, 21) verbunden ist.

2. System nach Anspruch 1, **dadurch gekennzeichnet, dass** die beweglichen optischen Elemente mittels flexibler Plättchen (18) an der starren Konstruktion montiert sind.

3. System nach einem der vorherigen Ansprüche, **dadurch gekennzeichnet, dass** der Aktuator ein piezoelektrischer Aktuator ist.

4. System nach einem der vorherigen Ansprüche, **dadurch gekennzeichnet, dass** die beweglichen optischen Elemente optische Plättchen sind und dass es an Bord eines Raumflugkörpers montiert ist.

5. System zum Betätigen von wenigstens zwei beweglichen optischen Elementen (30, 37) mit dynamisch kompensierten und entgegengesetzten relativen Translationsbewegungen, **dadurch gekennzeichnet, dass** es in einer starren Konstruktion (9) wenigstens zwei bewegliche optische Elemente, wenigstens einen linearen Aktuator (19) umfasst, der mit einer Bewegungsübertragungsvorrichtung mit vier starren Armen (32, 33; 38, 39) verbunden ist, die an ihren Enden angelenkt sind und eine Raute bilden, wobei zwei gegenüberliegende Scheitelpunkte der Raute mit den beweglichen Elementen verbunden sind und zwei andere gegenüberliegende Scheitelpunkte der Raute mit dem Aktuator (31) verbunden sind, wobei jeder Arm jedes Paares von gegenüberliegenden Armen (32, 33 und 38, 39) jeweils auf einer Seite mit einem selben beweglichen Element verbunden sind wie der andere gegenüberliegende Arm des Paares und auf der anderen Seite mit dem Aktuator (31) verbunden sind, wobei jedes Paar gegenüberliegende Arme ein anderes bewegliches Element in Bewegung versetzt, wobei Gleitbahnen (35; 36) nur einen einzigen Translationsfreiheitsgrad auf einer Längsachse des Aktuators (31) haben, wobei die Gleitbahnen die beiden anderen gegenüberliegenden Scheitelpunkte der Raute mit dem Aktuator (31) verbinden, und **dadurch gekennzeichnet, dass** die beweglichen Elemente jeweils an wenigstens einem Lager (34) angelenkt sind.

6. System nach Anspruch 5, **dadurch gekennzeichnet, dass** der Aktuator ein piezoelektrischer Aktuator ist.

7. System nach Anspruch 5 oder 6, **dadurch gekennzeichnet, dass** die beweglichen optischen Elemente optische Plättchen sind und dass es an Bord eines Raumflugkörpers montiert ist.
